# EUROPEAN PATENT APPLICATION

(11) **EP 4 574 499 A1**
(43) Date of publication of application: **25.06.2025**
(21) Application number: 24220268.7
(22) Date of filing: 16.12.2024
(51) Int. Cl.: B60K 7/00, B60K 17/04, F16H 3/54, F16H 63/30

(54) **DISC POWERTRAIN WITH DUAL-DRIVE OR SINGLE-DRIVE DUAL-SPEED TRANSMISSION AND ELECTRIC VEHICLE**

(30) Priority: 18.12.2023 CN 202311750923
(71) Applicant: Huawei Digital Power Technologies Co., Ltd., Shenzhen, Guangdong 518043 (CN)
(72) Inventor: LI, Cheng, Shenzhen, 518043 (CN); WU, Chaoqiang, Shenzhen, 518043 (CN); CUI, Zhaoxue, Shenzhen, 518043 (CN)
(74) Representative: Gill Jennings & Every LLP

(57) **Abstract**

This application provides a disc powertrain with dual-drive or single-drive dual-speed transmission and an electric vehicle. A disc powertrain with dual-drive dual-speed transmission includes a gearshift mechanism, two disc motors, and two planetary gear reducers. The gearshift mechanism is configured to: separate a transmission connection between a planet carrier of one planetary gear reducer and a half shaft of one wheel, separate a transmission connection between a sun gear of the one planetary gear reducer and a motor shaft of one disc motor, and restore a transmission connection between the motor shaft of the one disc motor and the half shaft of the one wheel. In the disc powertrain provided in this application, the disc motor is able directly in transmission connection with the wheel without using the reducer, thereby reducing power loss in process of driving the wheel, and improving integration to facilitate miniaturization of the disc powertrain.

## Description

### TECHNICAL FIELD

This application relates to the field of electric vehicle device technologies, and in particular, to a disc powertrain with dual-drive or single-drive dual-speed transmission and an electric vehicle.

### BACKGROUND

With continuous improvement of a penetration rate of electric vehicles in the automotive industry and rapid improvement of an overall technical level of the industry, requirements of vehicle platforms for dual-speed gearshift powertrains of electric vehicles are to be further improved, and especially, requirements for power performance and transmission efficiency of the dual-speed gearshift powertrains become increasingly higher.

At present, a dual-speed gearshift powertrain uses a variable-speed transmission apparatus with two different transmission ratios, and two different transmission ratios between a disc motor and a wheel are obtained by using two different transmission paths, thereby achieving power output matching different operating statuses of an electric vehicle. An existing dual-speed gearshift powertrain has a large size, and in a process in which a disc motor is used to directly drive a wheel to rotate, a reducer rotates accordingly, resulting in low transmission efficiency of the dual-speed gearshift powertrain.

### SUMMARY

This application provides a disc powertrain with dual-drive or single-drive dual-speed transmission and an electric vehicle. In the disc powertrain, a disc motor may be directly in transmission connection with a wheel without using a reducer, thereby reducing a power loss in a process of driving the wheel, and improving transmission efficiency of the powertrain.

According to a first aspect, this application provides a disc powertrain with dual-drive dual-speed transmission. The disc powertrain is configured to drive two wheels of an electric vehicle, and the two wheels include two front wheels or two rear wheels of the electric vehicle. Specifically, rotating shafts of the two wheels are coaxial. The disc powertrain includes a gearshift mechanism, two disc motors, and two planetary gear reducers. The two disc motors are coaxially arranged between the two planetary gear reducers along an axial direction of the disc powertrain. A motor shaft of each disc motor is configured to be in transmission connection with a sun gear of one of the planetary gear reducers or in transmission connection with a half shaft of one of the wheels, and a planet carrier of each planetary gear reducer is configured to be in transmission connection with a half shaft of one of the wheels. The gearshift mechanism is configured to: separate a transmission connection between a planet carrier of one of the planetary gear reducers and a half shaft of one of the wheels, separate a transmission connection between a sun gear of the one planetary gear reducer and a motor shaft of one of the disc motors, and restore a transmission connection between the motor shaft of the one disc motor and the half shaft of the one wheel. In this technical solution, the gearshift mechanism is disposed, so that the motor shaft of the disc motor is directly in transmission connection with the half shaft of the one wheel and outputs power, and a transmission ratio between the disc motor and the wheel is 1. The state is mainly used in a scenario in which torque required by the electric vehicle is not large, for example, a scenario in which the electric vehicle travels at a high speed. Rotation output by the disc motor is directly transmitted to the wheel, and the reducer does not rotate accordingly, thereby reducing a power loss in a process of driving the wheel, to reduce output power consumption of the disc motor. In this way, more output power consumption is provided to the wheel, and this helps improve output efficiency of the disc motor. In addition, the disc powertrain has high integration and occupies less space.

The gearshift mechanism is further configured to: separate the transmission connection between the motor shaft of the one disc motor and the half shaft of the one wheel, restore the transmission connection between the planet carrier of the one planetary gear reducer and the half shaft of the one wheel, and restore a transmission connection between a planetary gear of the one planetary gear reducer and a motor shaft of one of the disc motors. In this technical solution, the planetary gear speed changer is connected to a transmission link, to perform a speed change on output of the disc motor. The disc powertrain in this technical solution may provide two types of rotation to adapt to different application scenarios of the vehicle.

In a specific technical solution, one gearshift mechanism includes a drive assembly and two transmission members, one of the two transmission members is circumferentially fastened to and axially slidably connected to the motor shaft of the disc motor, and the other of the two transmission members is configured to be circumferentially fastened to and axially slidably connected to a half shaft of a wheel. The drive assembly is configured to: drive the one transmission member to move in a first direction, restore a transmission connection between the one transmission member and the sun gear, restore a transmission connection between the planet carrier and the other transmission member, and separate a transmission connection between the one transmission member and the other transmission member; and drive the other transmission member to move in a second direction, separate the transmission connection between the one transmission member and the sun gear, separate the transmission connection between the planet carrier and the other transmission member, and restore the transmission connection between the one transmission member and the other transmission member. The first direction and the second direction are parallel to the axial direction, and the first direction and the second direction are opposite. In this technical solution, the drive assembly drives the first transmission member to move back and forth in the axial direction, so that the disc powertrain may be driven to switch between two output rotation speeds, and a driving process is simple.

Specifically, one axial end face of the one transmission member of the gearshift mechanism and an axial end face of a connection of the sun gear are opposite along the axial direction, and a transmission connection occurs in a state in which the one axial end face of the one transmission member abuts against the axial end face of the connector of the sun gear; another axial end face of the one transmission member and one axial end face of the other transmission member are opposite along the axial direction, and a transmission connection occurs in a state in which the another axial end face of the one transmission member abuts against the one axial end face of the other transmission member; and another axial end face of the other transmission member and an axial end face of the planet carrier are opposite along the axial direction, and a transmission connection occurs in a state in which the another axial end face of the other transmission member abuts against the axial end face of the planet carrier.

In a technical solution, the two axial end faces that are opposite along the axial direction may be respectively friction surfaces, and friction is generated after the two axial end faces are attached to each other, so that the friction may be used for transmission. Transmission cannot be implemented in a state in which the two axial end faces are separated from each other. In a technical solution, the two axial end faces that are opposite along the axial direction may alternatively be respectively gears, and the two gears mesh for transmission after the two axial end faces are attached to each other. Transmission cannot be implemented in a state in which the two axial end faces are separated from each other.

The one transmission member of the gearshift mechanism includes one axial clamping surface, the other transmission member includes another axial clamping surface, the one axial clamping surface faces the disc motor, the another axial clamping surface faces away from the disc motor, and the one axial clamping surface is adjacent to the another axial clamping surface. A projection of the one axial clamping surface along the axial direction at least partially coincides with a projection of the another axial end clamping surface along the axial direction. In a process in which the first transmission member moves in the first direction, the one axial clamping surface of the first transmission member abuts against the another axial clamping surface of the second transmission member, so that the first transmission member drives the second transmission member to move in the first direction. The one axial clamping surface of the first transmission member and the another axial clamping surface of the second transmission member are not circumferentially limited, and in a state in which the one axial clamping surface of the first transmission member abuts against the another axial clamping surface of the second transmission member, the first transmission member and the second transmission member rotate independently.

The other transmission member of one of two gearshift mechanisms is located on a side that is of the one planetary gear reducer and that faces away from the other disc motor, and the other transmission member of the other gearshift mechanism is located on a side that is of the other planetary gear reducer and that faces away from the one disc motor. Alternatively, the two other transmission members of the two gearshift mechanisms are respectively located at two ends of the two planetary gear reducers along the axial direction of the disc powertrain; or the two planetary gear reducers are arranged between the two other transmission members of the two gearshift mechanisms along the axial direction of the disc powertrain.

In a technical solution, the drive assembly of the gearshift mechanism includes a solenoid valve and a reset member, the solenoid valve is configured to drive the one transmission member to move in the first direction, and the reset member is configured to drive the one transmission member to move in the second direction. A solenoid valve of one drive assembly and a solenoid valve of the other drive assembly are located between the two disc motors. This helps improve integration of the disc powertrain.

To further improve the integration of the disc powertrain, the solenoid valve of the one drive gearshift assembly and the solenoid valve of the other drive gearshift assembly are assembled in a same housing. For example, coils and plungers of the two solenoid valves may be assembled in one armature. In this way, space occupied by the two solenoid valves is reduced, to facilitate a reduction of a size of the disc powertrain.

To connect the solenoid valve of the gearshift mechanism and the one transmission member, a shaft hole is provided inside the motor shaft of the disc motor, and the shaft hole runs through the motor shaft along the axial direction. The solenoid valve is connected to the one transmission member by using an ejector rod, and the ejector rod penetrates the shaft hole. In this solution, the ejector rod is assembled by directly using the shaft hole in the motor shaft of the disc motor, thereby helping reduce space occupied by the gearshift mechanism, to improve the integration of the disc powertrain. In addition, a structure of the gearshift mechanism may be simplified, thereby reducing costs.

In technical solutions of this application, there are a plurality of selections for quantities of a stator and a rotor that are included in the disc motor. In a technical solution, each disc motor includes one stator and two rotors, the one stator is located between the two rotors along an axial direction of the disc motor, and the two rotors are separately fastened to the motor shaft of the disc motor. Alternatively, in another technical solution, each disc motor includes two stators and two rotors, the two stators are coaxially arranged between the two rotors along the axial direction of the disc motor, and the two rotors are separately fastened to the motor shaft of the disc motor. In the foregoing technical solution, the two rotors improve power density and output power of the disc motor, thereby improving power density and output power of the disc powertrain.

To assemble the rotor of the disc motor, the disc motor further includes a locking nut and a resolver, the locking nut is threadedly connected to the motor shaft of the disc motor, and an axial end face of the locking nut abuts against an axial end face of the rotor, so that the rotor is fixedly assembled along the axial direction. The resolver is configured to detect a rotation speed of the disc motor, and the resolver is mounted on a periphery of the locking nut. Therefore, a rotor of the resolver is fastened to the motor shaft of the disc motor. This solution reduces an axial size occupied by the resolver, so that the disc powertrain is more compact along the axial direction, thereby helping improve integration of the disc powertrain.

In a technical solution, the motor shaft of the disc motor is assembled in the stator by using two angular contact bearings, and the two angular contact bearings are symmetrically arranged along the axial direction of the disc powertrain. The angular contact bearing has both a radial bearing capacity and an axial bearing capacity, thereby helping improve reliability of assembling of the motor shaft and the stator.

According to a second aspect, this application further provides a disc powertrain with single-drive dual-speed transmission. The disc powertrain is configured to drive a single wheel of an electric vehicle. The disc powertrain includes a gearshift mechanism, one disc motor, and one planetary gear reducer. Along an axial direction of the disc powertrain, the disc motor is located on a side that is of the planetary gear reducer and that faces away from the wheel. A motor shaft of the disc motor is configured to be in transmission connection with a sun gear of the planetary gear reducer or in transmission connection with a half shaft of the wheel, and a planet carrier of the planetary gear reducer is configured to be in transmission connection with the half shaft of the wheel. The gearshift mechanism is configured to: separate the transmission connection between the planet carrier of the planetary gear reducer and the half shaft of the wheel, separate the transmission connection between the sun gear of the planetary gear reducer and the motor shaft of the disc motor, and restore the transmission connection between the motor shaft of the disc motor and the half shaft of the wheel. The disc powertrain in this technical solution is a disc powertrain with single-drive dual-speed transmission. The one wheel may be driven to change a speed, the motor shaft of the disc motor is directly in transmission connection with the half shaft of the one wheel and outputs power, and a transmission ratio between the disc motor and the wheel is 1. The state is mainly used in a scenario in which torque required by the electric vehicle is not large, for example, a scenario in which the electric vehicle travels at a high speed. Rotation output by the disc motor is directly transmitted to the wheel, and the reducer does not rotate accordingly, thereby reducing a power loss in a process of driving the wheel, to reduce output power consumption of the disc motor. In this way, more output power consumption is provided to the wheel, and this helps improve output efficiency of the disc motor.

The gearshift mechanism is further configured to: separate the transmission connection between the motor shaft of the disc motor and the half shaft of the wheel, restore the transmission connection between the planet carrier of the planetary gear reducer and the half shaft of the wheel, and restore a transmission connection between a planetary gear of the planetary gear reducer and the motor shaft of the disc motor. In this technical solution, the planetary gear speed changer is connected to a transmission link, to perform a speed change on output of the disc motor. The disc powertrain in this technical solution may provide two types of rotation to adapt to different application scenarios of the vehicle.

According to a third aspect, this application further provides an electric vehicle. The electric vehicle includes two wheels and the dual-speed gearshift disc powertrain provided in the first aspect, and the disc powertrain is configured to drive the two wheels. Specifically, two gearshift mechanisms of the disc powertrain are respectively in transmission connection with the two wheels, to drive the wheels to rotate. The electric vehicle has rich application scenarios. In the disc powertrain, the disc motor may be directly in transmission connection with the wheel without using the reducer, thereby reducing a power loss in a process of driving the wheel, and improving integration to facilitate miniaturization of the disc powertrain.

Alternatively, the electric vehicle includes two wheels and two disc powertrains with single-drive dual-speed transmission provided in the second aspect, and each disc powertrain is configured to drive a single wheel of the two wheels. Specifically, a gearshift mechanism of each disc powertrain is in transmission connection with a single wheel. The electric vehicle has rich application scenarios. In the disc powertrain, the disc motor may be directly in transmission connection with the wheel without using the reducer, thereby reducing a power loss in a process of driving the wheel, and improving integration to facilitate miniaturization of the disc powertrain.

### BRIEF DESCRIPTION OF DRAWINGS

FIG. 1 is a diagram of a structure of an electric vehicle according to an embodiment of this application;
FIG. 2 is a diagram of a structure of a disc powertrain with single-drive dual-speed transmission according to an embodiment of this application;
FIG. 3 is a diagram of a structure of a planetary gear reducer according to an embodiment of this application;
FIG. 4 is a diagram of a structure of a gearshift mechanism according to an embodiment of this application;
FIG. 5 is a diagram of a structure of a disc powertrain with single-drive dual-speed transmission according to an embodiment of this application;
FIG. 6 is a diagram of a sectional structure of a disc motor according to an embodiment of this application; and
FIG. 7 is a diagram of a structure of a disc powertrain with independent dual-drive dual-speed transmission according to an embodiment of this application.

### Reference numerals:

100: vehicle body; 200: wheel;
300: disc powertrain;
11: disc motor; 111: motor shaft;
112: rotor; 113: stator;
114: locking nut; 115: resolver;
12: planetary gear reducer; 121: first transmission portion;
122: second transmission portion; 125: sun gear;
126: planet carrier; 1261: connecting shaft;
1262: crossbeam; 127: planetary gear;
13: gearshift mechanism; 131: drive assembly;
1311: solenoid valve; 13111: coil;
13112: plunger; 1312: reset member;
1313: ejector rod; 132: first transmission member;
1321: third transmission portion; 1322: fourth transmission portion;
1323: first bent plate; 133: second transmission member;
1331: fifth transmission portion; 1332: sixth transmission portion;
1333: second bent plate; A: first direction; and
B: second direction.

### DESCRIPTION OF EMBODIMENTS

To make the objectives, technical solutions, and advantages of this application clearer, the following further describes this application in detail with reference to accompanying drawings. It is clear that embodiments described in this specification are merely some but not all of embodiments of this application.

Terms used in the following embodiments are merely intended to describe specific embodiments, but are not intended to limit this application. Reference to "an embodiment", "a specific embodiment", or the like described in this specification means that one or more embodiments of this application include a specific feature, structure, or characteristic described with reference to this embodiment. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

To facilitate understanding of a dual-speed gearshift disc powertrain and an electric vehicle that are provided in embodiments of this application, the following first describes an application scenario of the dual-speed gearshift disc powertrain and the electric vehicle. Currently, vehicles are used in more scenarios in production and life, and especially, applications of electric vehicles are gradually increasing. As a power component of an electric vehicle, the dual-speed gearshift disc powertrain plays an important role in performance of the electric vehicle. Similarly, because the dual-speed gearshift disc powertrain is used as a power component for various electric devices, performance of the dual-speed gearshift disc powertrain plays an important role in all electric devices. Therefore, this application provides a dual-speed gearshift disc powertrain and an electric vehicle, to improve a power output capability and transmission efficiency of the dual-speed gearshift disc powertrain, and improve driving performance of the electric vehicle.

The dual-speed gearshift disc powertrain in embodiments of this application may be applied to different types of electric devices. For example, the electric device may be an electric vehicle, for example, various types of electric vehicles such as an electric vehicle (Electric Vehicle, EV for short), a battery electric vehicle (Battery Electric Vehicle, BEV for short), a hybrid electric vehicle (Hybrid Electric Vehicle, HEV for short), a range extended electric vehicle (Range Extended Electric Vehicle, REEV for short), a plug-in hybrid electric vehicle (Plug-in Hybrid Electric Vehicle, PHEV for short), and a new energy vehicle (New Energy Vehicle). In some implementations, from a perspective of an application scenario or a function, the electric vehicles include a passenger vehicle and various special operation vehicles with specific functions, for example, an engineering rescue vehicle, a sprinkler, a suction sewage truck, a cement mixer, a crane, and a medical vehicle. In addition, the electric device may alternatively be an air vehicle, an elevator, an aircraft, or the like.

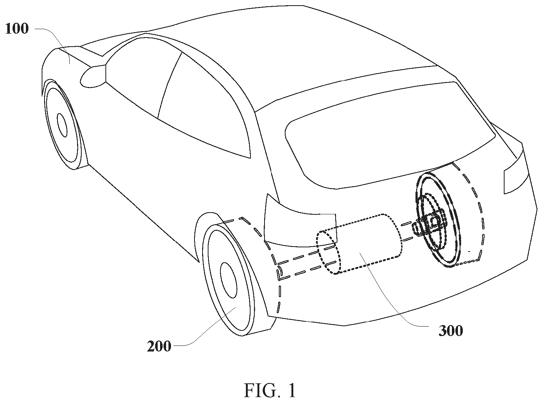

FIG. 1 is a diagram of a structure of an electric vehicle according to an embodiment of this application. Refer to FIG. 1. The electric vehicle in this embodiment of this application includes a vehicle body 100, a wheel 200, and a disc powertrain 300. The wheel 200 and the disc powertrain 300 are mounted on the vehicle body 100, and the disc powertrain 300 is in transmission connection with the wheel 200. The disc powertrain 300 is configured to convert electric energy into mechanical energy and transmit the mechanical energy to the wheel 200, to drive the wheel 200 to rotate and drive the electric vehicle to travel.

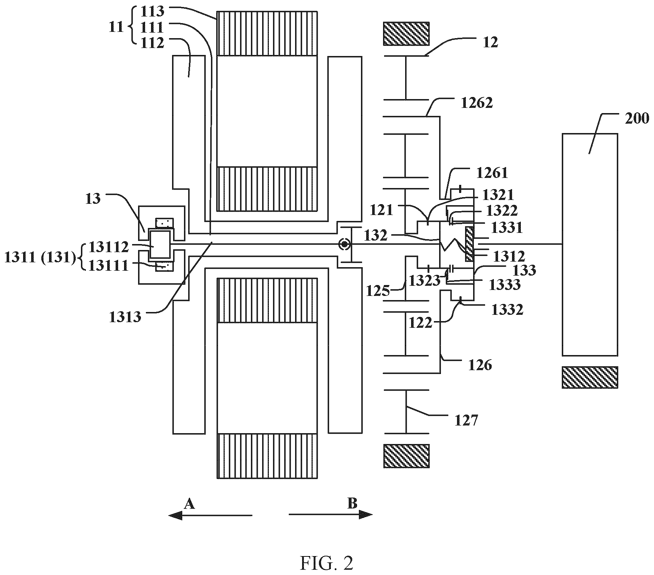

FIG. 2 is a diagram of a structure of a disc powertrain with single-drive dual-speed transmission according to an embodiment of this application. As shown in FIG. 2, the disc powertrain 300 in this embodiment of this application includes a disc motor 11, a planetary gear reducer 12, and a gearshift mechanism 13. The disc powertrain is configured to drive a single wheel of an electric vehicle. In an embodiment, the electric vehicle includes two wheels and two disc powertrains with single-drive dual-speed transmission, and each disc powertrain is configured to drive a single wheel of the two wheels.

Still refer to FIG. 2. The disc motor may also be referred to as an axial motor, an axial air gap motor, or the like. Specifically, the disc motor includes a rotor 112, a motor shaft 111, and a stator 113. The rotor 112 and the stator 113 of the disc motor are adjacently arranged along an axial direction. Specifically, the rotor 112 and the stator 113 are adjacently arranged in a housing along the axial direction, and the stator 113, the rotor 112, and the motor shaft 111 are coaxially disposed. The stator 113 is mounted on the motor shaft 111 and is rotatably connected to the motor shaft 111, and the stator 113 is fastened to the housing. The rotor 112 is mounted on the motor shaft 111 and is fastened to the motor shaft 111, and the rotor 112 and the motor shaft 111 are rotatably connected to the housing. For ease of understanding, the disc motor may be specifically divided into a first part and a second part. The first part includes the housing and the stator 113 that are fastened to each other, the second part includes the rotor 112 and the motor shaft 111 that are fastened to each other, and the first part and the second part are relatively rotatably connected. The disc motor has a compact structure and a short axial size, and has characteristics such as high torque density and high power density. Therefore, a size of the disc powertrain in the axial direction in this solution helps reduce a weight and a size of the disc powertrain, and is especially suitable for current miniaturization and lightweight requirements of an electric device.

The stator 113 of the disc motor includes an armature winding, an alternating current is supplied to the armature winding of the stator 113, and the stator 113 generates an alternating magnetic flux. The rotor 112 includes a permanent magnet, so that the rotor 112 generates a permanent magnetic flux. A gap between the stator 113 and the rotor 112 is an air gap, and the air gap has an air gap length G, so that the alternating magnetic flux generated by the stator 113 can interact with the permanent magnetic flux generated by the rotor 112. As described above, the alternating magnetic flux generated by the stator 113 interacts with the permanent magnetic flux generated by the rotor 112, so that the rotor 112 rotates relative to the stator 113. The rotor 112 is fastened to the motor shaft 111, so that the motor shaft 111 rotates along with the rotor 112. The stator 113 is rotatably connected to the motor shaft 111, so that the motor shaft 111 can rotate relative to the stator 113, or in other words, the stator 113 is relatively stationary. In a working process of the disc motor, the stator 113 remains stationary, and the rotor 112 and the motor shaft 111 synchronously rotate.

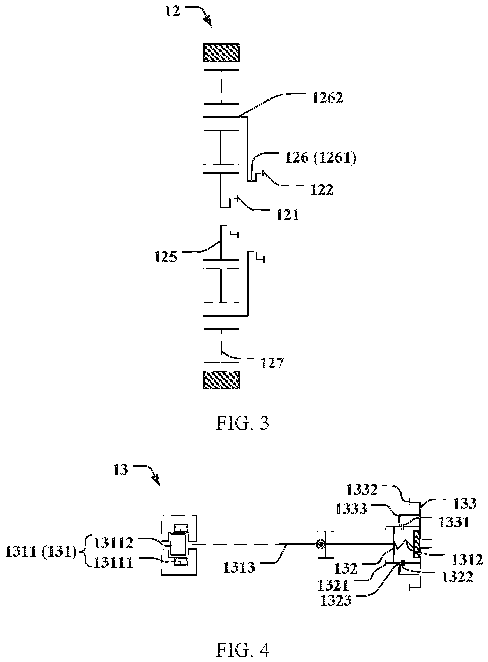

FIG. 3 is a diagram of a structure of a planetary gear reducer according to an embodiment of this application. As shown in FIG. 2 and FIG. 3, the planetary gear reducer 12 includes a sun gear 125, a planet carrier 126, and two planetary gears 127. Specifically, both the sun gear 125 and the planetary gear 127 may be gears, and the sun gear 125 meshes with the planetary gear 127, so that the sun gear 125 rotates to drive the planetary gear 127 to rotate around the sun gear 125. The sun gear 125 is circumferentially fastened to a rotating shaft of the sun gear 125, so that rotation of the rotating shaft of the sun gear 125 may be transmitted to the sun gear 125, and the sun gear 125 is in transmission connection with the two planetary gears 127 through meshing, so that the sun gear 125 transmits the rotation to the planetary gears 127. The planet carrier 126 includes a connecting shaft 1261 that axially extends and two crossbeams 1262, one of the crossbeams 1262 penetrates a shaft hole of a rotating shaft of one planetary gear 127, and the crossbeam 1262 is circumferentially rotatably connected to the shaft hole in which the crossbeam 1262 is located. The other crossbeam 1262 penetrates a shaft hole of a rotating shaft of the other planetary gear 127, and the other crossbeam 1262 is circumferentially rotatably connected to the shaft hole. In this way, in a process in which the sun gear 125 drives the planetary gear 127 to rotate around the sun gear 125, the planetary gear 127 drives the planet carrier 126 to rotate, and the rotation is output to the wheel 200 through the connecting shaft 1261 of the planet carrier 126. The sun gear 125 and the planet carrier 126 have a specific transmission ratio, so that a rotation speed output from the planet carrier 126 is different from a rotation speed input to the sun gear 125, and a speed change is implemented by the planetary gear reducer 12.

In an embodiment, as shown in FIG. 2, the disc motor along the axial direction of the disc powertrain is located on a side that is of the planetary gear reducer 12 and that faces away from the wheel, the motor shaft of the disc motor is configured to be in transmission connection with the sun gear of the planetary gear reducer 12 or in transmission connection with a half shaft of the wheel, and the planet carrier of the planetary gear reducer 12 is configured to be in transmission connection with the half shaft of the wheel. The gearshift mechanism is configured to: separate the transmission connection between the planet carrier of the planetary gear reducer 12 and the half shaft of the wheel, separate the transmission connection between the sun gear of the planetary gear reducer 12 and the motor shaft of the disc motor, and restore the transmission connection between the motor shaft of the disc motor and the half shaft of the wheel. In this state, the motor shaft of the disc motor is directly in transmission connection with the half shaft of the wheel, and power of the disc motor is directly transmitted to the wheel without passing through the planetary gear reducer, to drive the wheel to move at a rotation speed. The gearshift mechanism is further configured to: separate the transmission connection between the motor shaft of the disc motor and the half shaft of the wheel, restore the transmission connection between the planet carrier of the planetary gear reducer 12 and the half shaft of the wheel, and restore a transmission connection between the planetary gear of the planetary gear reducer 12 and the motor shaft of the disc motor. In this state, the motor shaft of the disc motor is in transmission connection with the half shaft of the wheel by using the reducer, and power output by the motor shaft of the disc motor first undergoes a speed change performed by the reducer and then is transmitted to the wheel, to drive the wheel to move at another rotation speed.

In an embodiment, the sun gear of the planetary gear reducer 12 has a first transmission portion 121, and the planet carrier has a second transmission portion 122. The sun gear 125 is connected to the disc motor 11, and the planet carrier 126 is configured to be connected to the wheel 200. The first transmission portion 121 and the second transmission portion 122 are separately configured to be in transmission connection with the gearshift mechanism 13.

FIG. 4 is a diagram of a structure of a gearshift mechanism according to an embodiment of this application. As shown in FIG. 2 and FIG. 4, in an embodiment, the gearshift mechanism 13 includes a drive assembly 131 and two transmission members. For ease of description, it is considered that one of the two transmission members is a first transmission member 132, and the other transmission member is a second transmission member 133. The first transmission member 132 is circumferentially fastened to and axially slidably connected to the motor shaft of the disc motor, and the second transmission member 133 is configured to be circumferentially fastened to and axially slidably connected to the half shaft of the wheel. The drive assembly is configured to: drive the first transmission member to move in a first direction, restore a transmission connection between the first transmission member and the sun gear 125, restore a transmission connection between the planet carrier 126 and the second transmission member 133, and separate a transmission connection between the first transmission member 132 and the second transmission member 133. The drive assembly is further configured to: drive the second transmission member 133 to move in a second direction, separate the transmission connection between the first transmission member and the sun gear 125, separate the transmission connection between the planet carrier 126 and the second transmission member 133, and restore the transmission connection between the first transmission member 132 and the second transmission member 133. The first direction and the second direction are parallel to the axial direction, and the first direction and the second direction are opposite. In this embodiment, the drive assembly drives the first transmission member to move back and forth in the axial direction, so that the disc powertrain may be driven to switch between two output rotation speeds, and a driving process is simple.

In an embodiment, the first transmission member 132 is circumferentially fastened to and axially slidably connected to the motor shaft 111 of the disc motor 11. In an embodiment, the first transmission member 132 and the motor shaft 111 of the disc motor 11 are connected by using a spline, to implement circumferential fastening and axial sliding, thereby improving stability of a connection between the first transmission member 132 and the motor shaft 111 of the disc motor 11. Alternatively, in an embodiment, the first transmission member 132 and the motor shaft 111 of the disc motor 11 are connected by using a convex strip and a sliding slot in a cooperative manner, to implement circumferential fastening and axial sliding. The second transmission member 133 is configured to be circumferentially fastened to and axially slidably connected to the wheel 200. Similarly, in an embodiment, the second transmission member 133 and a transmission shaft of the wheel 200 may be connected by using a spline, to implement circumferential fastening and axial sliding, thereby improving stability of a connection between the first transmission member 132 and the motor shaft 111 of the disc motor 11. Alternatively, in an embodiment, the second transmission member 133 and the transmission shaft of the wheel 200 are connected by using a convex strip and a sliding slot in a cooperative manner, to implement circumferential fastening and axial sliding.

The drive assembly 131 is in transmission connection with the first transmission member 132. The drive assembly 131 is configured to drive the first transmission member 132 to move in an axial direction of the disc motor 11, and the first transmission member 132 drives the second transmission member 133 to move in the axial direction of the disc motor 11. The first transmission member 132 includes a third transmission portion 1321 and a fourth transmission portion 1322, and the second transmission member 133 includes a fifth transmission portion 1331 and a sixth transmission portion 1332. The first transmission portion 121 of the planetary gear reducer 12 and the third transmission portion 1321 are adjacent along the axial direction of the disc motor 11, and in a state in which the first transmission portion 121 is in contact with the third transmission portion 1321, the first transmission portion 121 and the third transmission portion 1321 form a transmission pair, so that circumferential transmission can be implemented. The fourth transmission portion 1322 and the fifth transmission portion 1331 are adjacent along the axial direction of the disc motor 11, and in a state in which the fourth transmission portion 1322 is in contact with the fifth transmission portion 1331, the fourth transmission portion 1322 and the fifth transmission portion 1331 form a transmission pair, so that circumferential transmission can be implemented. The second transmission portion 122 and the sixth transmission portion 1332 are adjacent along the axial direction of the disc motor 11, and in a state in which the second transmission portion 122 is in contact with the sixth transmission portion 1332, the second transmission portion 122 and the sixth transmission portion 1332 form a transmission pair, so that circumferential transmission can be implemented.

In an embodiment, the first transmission portion 121 and the third transmission portion 1321 are adjacently arranged along the axial direction of the disc motor 11, have mutual transmission in a circumferential direction in the state in which the first transmission portion 121 is in contact with the third transmission portion 1321, and are separated and have no transmission in a state in which there is a gap between the first transmission portion 121 and the third transmission portion 1321. The fourth transmission portion 1322 and the fifth transmission portion 1331 are adjacently arranged along the axial direction of the disc motor 11, have mutual transmission in a circumferential direction in the state in which the fourth transmission portion 1322 is in contact with the fifth transmission portion 1331, and are separated and have no transmission in a state in which there is a gap between the fourth transmission portion 1322 and the fifth transmission portion 1331. The sixth transmission portion 1332 and the second transmission portion 122 are adjacently arranged along the axial direction of the disc motor 11, have mutual transmission in a circumferential direction in the state in which the sixth transmission portion 1332 is in contact with the second transmission portion 122, and are separated and have no transmission in a state in which there is a gap between the sixth transmission portion 1332 and the second transmission portion 122.

The drive assembly 131 drives the first transmission member 132 to move in a first direction A, and the first transmission member 132 drives the second transmission member 133 to move in the first direction A, so that the first transmission portion 121 is in contact with the third transmission portion 1321 for transmission, the second transmission portion 122 is in contact with the sixth transmission portion 1332 for transmission, and there is a gap between the fourth transmission portion 1322 and the fifth transmission portion 1331. The drive assembly 131 drives the first transmission member 132 to move in a second direction B, so that the fourth transmission portion 1322 is in contact with the fifth transmission portion 1331 for transmission; and the second transmission member 133 is pushed to move in the second direction B, so that there is a gap between the first transmission portion 121 and the third transmission portion 1321, and there is a gap between the second transmission portion 122 and the sixth transmission portion 1332. The first direction A and the second direction B are parallel to the axial direction of the disc motor 11, and the first direction A and the second direction B are opposite. The drive assembly 131 in this embodiment drives the first transmission member 132 to move in the axial direction, thereby performing gear shifting of the disc powertrain. Specifically, the gearshift mechanism 13 includes a first state and a second state. In the first state, the planetary gear reducer 12 is connected to a transmission link, to perform a speed change on output of the disc motor 11. In the second state, the planetary gear reducer 12 is separated from the transmission link, and rotation output by the disc motor 11 is directly transmitted to the wheel 200. In the second state, the rotation output by the disc motor 11 is directly transmitted to the wheel 200, and the planetary gear reducer 12 does not rotate accordingly, thereby reducing a power loss in a process of driving the wheel, to reduce output power consumption of the disc motor 11. In this way, more output power consumption is provided to the wheel 200, and this helps improve output efficiency of the disc motor 11. In addition, the drive assembly 131 controls the gearshift mechanism 13 to suit the first state and the second state, so that power output of the disc powertrain matches different operating statuses of the vehicle, to improve output efficiency of the disc powertrain and economy of the vehicle. In addition, the disc powertrain has high integration and occupies less space.

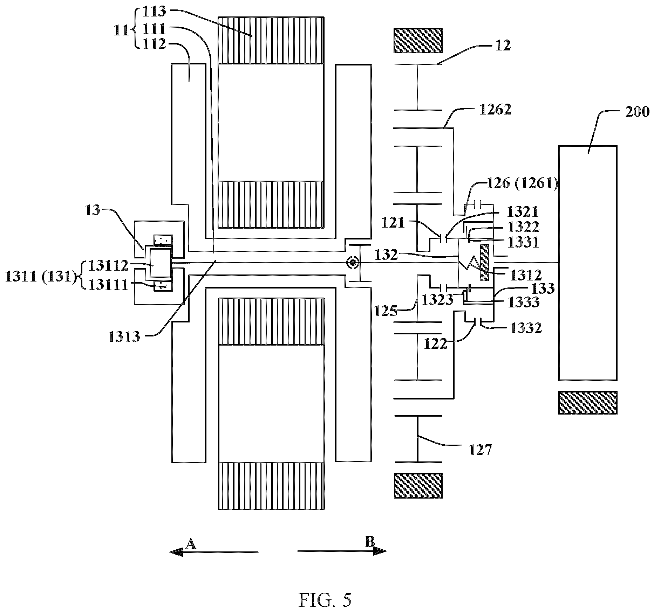

The gearshift mechanism in the embodiment shown in FIG. 2 is in the first state. As shown in FIG. 2, the drive assembly 131 drives the first transmission member 132 to move in the first direction A, so that the first transmission portion 121 is in contact with the third transmission portion 1321 for transmission, the second transmission portion 122 is in contact with the sixth transmission portion 1332 for transmission, and there is a gap between the fourth transmission portion 1322 and the fifth transmission portion 1331. Therefore, the motor shaft 111 of the disc motor 11 is in transmission connection with the sun gear 125 by using the first transmission portion 121 and the third transmission portion 1321, and the planet carrier 126 is in transmission connection with the sixth transmission portion 1332 by using the second transmission portion 122, and transmits power to the wheel 200 by using the second transmission member 133, so that the planetary gear reducer 12 is connected to the transmission link. In the first state, a transmission ratio between the disc motor 11 and the wheel 200 is greater than 1, and the planetary gear reducer 12 performs a speed reduction and a torque increase on output of the disc motor 11. The state is mainly used in scenarios such as starting and climbing in which the electric vehicle requires large torque. FIG. 5 is a diagram of a structure of a disc powertrain with single-drive dual-speed transmission according to an embodiment of this application. The gearshift mechanism 13 in the embodiment shown in FIG. 5 is in the second state. As shown in FIG. 5, the drive assembly 131 drives the first transmission member 132 to move in the second direction B, and the second transmission member 133 moves in the second direction B, so that the fourth transmission portion 1322 is in contact with the fifth transmission portion 1331 for transmission, there is a gap between the first transmission portion 121 and the third transmission portion 1321, and there is a gap between the second transmission portion 122 and the sixth transmission portion 1332. Therefore, the motor shaft 111 of the disc motor 11 is separated and decoupled from the sun gear 125, and the planet carrier 126 is separated and decoupled from the second transmission member 133, so that the planetary gear reducer 12 is independent of the transmission link. The fourth transmission portion 1322 and the fifth transmission portion 1331 are connected through transmission contact, so that the motor shaft 111 of the disc motor 11 is in transmission connection with the second transmission member 133, and the disc motor 11 transmits power to the wheel 200 by using the second transmission member 133. In the second state, the motor shaft 111 of the disc motor 11 is directly connected to the wheel 200 and outputs power, and the transmission ratio between the disc motor 11 and the wheel 200 is 1. The state is mainly used in a scenario in which torque required by the electric vehicle is not large, for example, a scenario in which the electric vehicle travels at a high speed.

In an embodiment, the first transmission portion, the second transmission portion, the third transmission portion, the fourth transmission portion, the fifth transmission portion, and the sixth transmission portion are respectively axial end faces of corresponding mechanical parts, and a transmission relationship between different structures may be changed by driving the first transmission member to move in the axial direction. Specifically, one axial end face (the third transmission portion) of the first transmission member and an axial end face (the first transmission portion) of a connection of the sun gear are opposite along the axial direction, and a transmission connection occurs in a state in which the one axial end face (the third transmission portion) of the first transmission member abuts against the axial end face (the first transmission portion) of the connector of the sun gear; another axial end face (the fourth transmission portion) of the first transmission member and one axial end face (the fifth transmission portion) of the second transmission member are opposite along the axial direction, and a transmission connection occurs in a state in which the another axial end face (the fourth transmission portion) of the first transmission member abuts against the one axial end face (the fifth transmission portion) of the second transmission member; and another axial end face (the sixth transmission portion) of the second transmission member and an axial end face (the second transmission portion) of the planet carrier are opposite along the axial direction, and a transmission connection occurs in a state in which the another axial end face (the sixth transmission portion) of the second transmission member abuts against the axial end face (the second transmission portion) of the planet carrier.

In an embodiment, the motor shaft 111 of the disc motor, the sun gear 125, and the transmission shaft of the wheel 200 are coaxial. Specifically, in an ideal state, an axis of the motor shaft 111 of the disc motor, an axis of the sun gear 125, and an axis of the transmission shaft of the wheel 200 are located in a same straight line. This solution helps further reduce the size of the disc powertrain.

Still refer to FIG. 2 and FIG. 4. In an embodiment, the drive assembly 131 includes a solenoid valve 1311 and a reset member 1312. Specifically, the solenoid valve 1311 includes a coil 13111 and a plunger 13112. The coil 13111 becomes an electromagnet after being powered on, and the plunger 13112 is a plunger 13112 made of a magnetic conductive material. For example, the plunger 13112 may be a silicon steel plunger or a pure iron plunger. In a state in which the coil 13111 is not powered on, a distance between a center of the coil 13111 along the axial direction and the third transmission portion 1321 is less than a distance between a center of the plunger 13112 along the axial direction and the third transmission portion 1321. Specifically, a surface that is of the third transmission portion 1321 and that faces the solenoid valve 1311 is used as a reference, and a distance between the center of the coil 13111 along the axial direction and the surface of the third transmission portion 1321 is less than a distance between the center of the plunger 13112 along the axial direction and the surface of the third transmission portion 1321. The reset member 1312 is in an energy storage state, and the reset member 1312 continuously applies pressure in the first direction A to the first transmission member 132. The plunger 13112 is fastened to the first transmission member 132, and the reset member 1312 is located on a side that is of the first transmission member 132 and that faces away from the plunger 13112. In this case, the first transmission member 132 is located between the plunger 13112 and the reset member 1312. In a state in which the coil 13111 is powered on, the plunger 13112 is driven to move in the second direction B, so that the plunger 13112 drives the first transmission member 132 to move in the second direction B. In a state in which the coil 13111 is powered off, the reset member 1312 drives the first transmission member 132 to move in the first direction A.

The following describes a working process of the drive assembly 131 by using an example in which the reset member 1312 is a spring. The reset member 1312 is in the energy storage state, one end of the reset member 1312 is connected to the first transmission member 132, and the other end is fastened. In this case, pressure in the first direction A is applied to the first transmission member 132, so that the first transmission member 132 has a trend of moving in the first direction A. The coil 13111 is not powered on, and the drive assembly 131 is in the first state. The first transmission member 132 drives, under pressure of the reset member 1312, the second transmission member 133 to enable the second transmission member 133 to have a trend of moving in the first direction A, so that the third transmission portion 1321 is in contact with the first transmission portion 121 for transmission, the fourth transmission portion 1322 is separated from the fifth transmission portion 1331 to form a gap, and the sixth transmission portion 1332 is in contact with the second transmission portion 122 for transmission. In this case, the planetary gear reducer 12 is connected to the transmission link between the disc motor 11 and the wheel 200. The coil 13111 is powered on, the drive assembly 131 is in the second state, and the coil 13111 drives the plunger 13112 to move in the second direction B (overcoming pressure of the reset member 1312), so that the third transmission portion 1321 is separated and decoupled from the first transmission portion 121, the fourth transmission portion 1322 is in contact with the fifth transmission portion 1331 for transmission, and the sixth transmission portion 1332 is separated and decoupled from the second transmission portion 122. In this case, the disc motor 11 is directly connected to the wheel 200 through transmission of the fourth transmission portion 1322 and the fifth transmission portion 1331, and power output by the disc motor 11 does not need to pass through the planetary gear reducer 12.

Still refer to FIG. 2 and FIG. 4. A shaft hole is provided inside the motor shaft 111 of the disc motor 11, and the shaft hole extends along the axial direction of the disc motor 11 and runs through the motor shaft 111 of the disc motor 11. The solenoid valve 1311 is located on a side that is of the disc motor 11 and that faces away from the wheel, the plunger 13112 is connected to the first transmission member 132 by using an ejector rod 1313, and the ejector rod 1313 penetrates the shaft hole. In this solution, a reasonable layout helps reduce the size of the disc powertrain and improve a miniaturization degree of the disc powertrain.

In an embodiment, one end of the ejector rod 1313 is fastened to the plunger 13112, and the other end is axially fastened to and circumferentially rotatably connected to the first transmission member 132. In this case, in a process in which the plunger 13112 moves in the axial direction of the disc motor 11, the first transmission member 132 may be driven to move, and the ejector rod 1313 does not affect rotation of the first transmission member 132. In a specific embodiment, one end of the ejector rod 1313 is fastened to the plunger 13112, and the other end of the ejector rod 1313 is connected to the first transmission member 132 by using a spherical pair. For example, the other end of the ejector rod 1313 has a spherical cavity, one end that is of the first transmission member 132 and that faces the ejector rod 1313 has a ball, and the ball is assembled in the spherical cavity. Alternatively, the other end of the ejector rod 1313 has a ball, one end that is of the first transmission member 132 and that faces the ejector rod 1313 has a spherical cavity, and the ball is assembled in the spherical cavity. In the foregoing embodiment, a connection structure between the plunger 13112 and the first transmission member 132 has some flexibility, has a specific tolerance absorption capability, and reduces a coaxiality requirement. Alternatively, in an embodiment, there is a cylindrical cavity at the other end of the ejector rod 1313, and the cylindrical cavity has a circumferential end face that faces the first transmission member 132 along the axial direction. One end that is of the first transmission member 132 and that faces the ejector rod 1313 has a cylindrical connection portion, and the cylindrical connection portion also has a circumferential end face. The cylindrical connection portion is assembled in the cylindrical cavity, and the circumferential end face of the cylindrical cavity axially abuts against the circumferential end face of the cylindrical connection portion. Alternatively, in an embodiment, there is a cylindrical connection portion at the other end of the ejector rod 1313, and the cylindrical connection portion has a circumferential end face that faces the first transmission member 132 along the axial direction. One end that is of the first transmission member 132 and that faces the ejector rod 1313 has a cylindrical cavity, and the cylindrical cavity also has a circumferential end face. The cylindrical connection portion is assembled in the cylindrical cavity, and the circumferential end face of the cylindrical cavity axially abuts against the circumferential end face of the cylindrical connection portion.

Still refer to FIG. 4 and FIG. 5. In an embodiment, the first transmission member 132 includes one axial clamping surface, and the second transmission member 133 includes another axial clamping surface. The one axial clamping surface of the first transmission member 132 faces the disc motor 11, and the another axial clamping surface of the second transmission member 133 faces away from the disc motor 11. A projection of the one axial clamping surface of the first transmission member 132 along the axial direction at least partially coincides with a projection of the another axial clamping surface of the second transmission member 133 along the axial direction, and the one axial clamping surface of the first transmission member 132 is adjacent to the another axial clamping surface of the second transmission member 133. In a process in which the first transmission member 132 moves in the first direction A, the one axial clamping surface of the first transmission member 132 abuts against the another axial clamping surface of the second transmission member 133, so that the first transmission member 132 drives the second transmission member 133 to move in the first direction A. The one axial clamping surface of the first transmission member 132 and the another axial clamping surface of the second transmission member 133 are not circumferentially limited, and in a state in which the one axial clamping surface of the first transmission member 132 abuts against the another axial clamping surface of the second transmission member 133, the first transmission member 132 and the second transmission member 133 rotate independently. To reduce mutual limitation of rotational movements of the first transmission member 132 and the second transmission member 133, friction may be reduced by applying lubricating oil or the like between the one axial clamping surface of the first transmission member 132 and the another axial clamping surface of the second transmission member 133.

In a specific embodiment, as shown in FIG. 4, the first transmission member 132 includes a first bent plate 1323, the first bent plate 1323 is circumferentially bent, and an axial end face of the first transmission member 132 is a surface on a side that is of the first bent plate 1323 and that faces the disc motor 11 along the axial direction. The second transmission member 133 includes a second bent plate 1333, the second bent plate 1333 of the second transmission member 133 is also circumferentially bent, and an axial end face of the second transmission member 133 is a surface on a side that is of the second bent plate 1333 and that faces away from the disc motor 11. The second bent plate 1333 of the second transmission member 133 is located on the side that is of the first bent plate 1323 of the first transmission member 132 and that faces the disc motor 11, so that the second bent plate 1333 of the second transmission member 133 and the first bent plate 1323 of the first transmission member 132 are clamped to each other.

In an embodiment, the fourth transmission portion 1322 is a friction surface, the fifth transmission portion 1331 is also a friction surface, and the fourth transmission portion 1322 is configured to rub against the fifth transmission portion 1331. In a state in which the fourth transmission portion 1322 is in contact with the fifth transmission portion 1331, the fourth transmission portion 1322 and the fifth transmission portion 1331 implement mutual transmission through friction, to form a transmission pair, so that a circumferential movement (rotation) is transmitted between the fourth transmission portion 1322 and the fifth transmission portion 1331. In a state in which there is a gap between the fourth transmission portion 1322 and the fifth transmission portion 1331, friction cannot be generated between the fourth transmission portion 1322 and the fifth transmission portion 1331, the fourth transmission portion 1322 and the fifth transmission portion 1331 are independent and decoupled from each other, and a circumferential movement (rotation) cannot be transmitted.

In another embodiment, the fourth transmission portion 1322 is a gear, the fifth transmission portion 1331 is also a gear, and the fourth transmission portion 1322 is configured to mesh with the fifth transmission portion 1331. In a state in which the fourth transmission portion 1322 is in contact with the fifth transmission portion 1331, the fourth transmission portion 1322 and the fifth transmission portion 1331 implement mutual transmission through meshing, to form a transmission pair, so that a circumferential movement (rotation) is transmitted between the fourth transmission portion 1322 and the fifth transmission portion 1331. In a state in which there is a gap between the fourth transmission portion 1322 and the fifth transmission portion 1331, the fourth transmission portion 1322 does not mesh with the fifth transmission portion 1331, the fourth transmission portion 1322 and the fifth transmission portion 1331 are independent and decoupled from each other, and a circumferential movement (rotation) cannot be transmitted. In a specific embodiment, the fourth transmission portion 1322 may be a helical gear, and the fifth transmission portion 1331 is a helical gear that meshes with the fourth transmission portion 1322, thereby facilitating transmission of rotation when the fourth transmission portion 1322 and the fifth transmission portion 1331 are coaxial.

Similarly, in an embodiment, the first transmission portion 121 is a friction surface, the third transmission portion 1321 is also a friction surface, and the third transmission portion 1321 is configured to rub against the first transmission portion 121. In an embodiment, the first transmission portion 121 is a gear, the third transmission portion 1321 is also a gear, and the first transmission portion 121 is configured to mesh with the third transmission portion 1321. For specific details, refer to specific embodiments of the fourth transmission portion 1322 and the fifth transmission portion 1331.

In an embodiment, the second transmission portion 122 is a friction surface, the sixth transmission portion 1332 is also a friction surface, and the sixth transmission portion 1332 is configured to rub against the second transmission portion 122. In an embodiment, the second transmission portion 122 is a gear, the sixth transmission portion 1332 is also a gear, and the second transmission portion 122 is configured to mesh with the sixth transmission portion 1332. For specific details, refer to specific embodiments of the fourth transmission portion 1322 and the fifth transmission portion 1331.

In this application, there are a plurality of selection solutions for quantities of the stator 113 and the rotor 112 that are included in the disc motor. In a specific embodiment, a difference between the quantities of the stator 113 and the rotor 112 that are included in the disc motor does not exceed 1, and the stator 113 and the rotor 112 are sequentially disposed at intervals.

Still refer to FIG. 2. In an embodiment, the disc motor includes two rotors 112 and one stator 113, and the two rotors 112 are both mounted on the motor shaft 111 and are both fastened to the motor shaft 111, so that the two rotors 112 are fastened to each other. The stator 113 is mounted on the motor shaft 111 and is rotatably connected to the motor shaft 111. The two rotors 112 are located on both sides of the stator 113 along the axial direction, or in other words, the one stator 113 is located between the two rotors 112 along the axial direction of the disc motor. The two rotors 112 separately interact with the stator 113. The two rotors 112 improve power density and output power of the disc motor, thereby improving power density and output power of the disc powertrain.

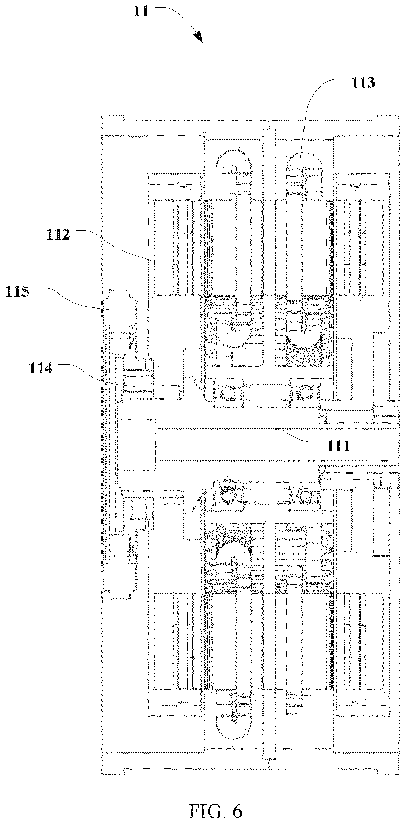

FIG. 6 is a diagram of a sectional structure of a disc motor according to an embodiment of this application. As shown in FIG. 6, in an embodiment, each disc motor includes two stators 113 and two rotors 112, the two stators 113 are coaxially arranged between the two rotors 112 along the axial direction of the disc motor, and the two rotors 112 are separately fastened to the motor shaft 111 of the disc motor. In this embodiment, the disc motor includes two interacting stators and rotors, which improve power density and output power of the disc motor, thereby improving power density and output power of the disc powertrain.

Still refer to FIG. 6. The disc motor further includes a locking nut 114 and a resolver 115. The locking nut 114 is threadedly connected to the motor shaft 111 of the disc motor 11, and an axial end face of the locking nut 114 abuts against an axial end face of the rotor 112, so that the rotor 112 is axially fastened to the motor shaft 111. The resolver 115 is mounted on a periphery of the locking nut 114. Specifically, the resolver 115 is configured to detect and feed back a signal such as a rotation speed of the disc motor 11. The resolver 115 includes a stator of the resolver 115 and a rotor of the resolver 115. The rotor of the resolver 115 and the stator of the resolver 115 rotate with each other. In a specific embodiment, the rotor of the resolver 115 is connected to the periphery of the locking nut 114 by using an adapter bracket, so that the rotor of the resolver 115 is fastened to the motor shaft 111 of the disc motor 11. This solution reduces an axial size occupied by the resolver 115, so that the disc powertrain is more compact along the axial direction, thereby helping improve integration of the disc powertrain.

In a specific embodiment, the rotor of the disc motor uses a built-in magnetic steel and magnetism gathering structure, to improve a saliency ratio and reluctance torque of an air gap magnetic field, thereby improving a torque output capability of the motor. In addition, an iron core of the rotor is assembled on an aluminum backplane in an interference fit manner, and an outer circumference of the aluminum backplane is wrapped with a carbon fiber coating layer, to improve structural strength of a rotor disk, thereby improving a maximum working speed and power density of the motor. The carbon fiber coating layer is assembled in an interference fit manner by using a boss at an inner diameter and a groove on an outer circumferential surface of the aluminum backplane, thereby implementing axial positioning, to prevent axial slippage between the carbon fiber coating layer and the aluminum backplane.

An iron core of the stator 113 of the disc motor uses a symmetrical slotted and yoke-free (less yoke) structure. Iron core teeth of the stator and magnetic poles on the rotors on both sides jointly form a closed-loop magnetic circuit, thereby reducing a thickness of the iron core of the stator and an axial size of the motor shaft 111. The iron core of the stator is fastened to the housing by using an interference fitting steel sleeve on an outer circle, and transmits torque; and supports the motor shaft 111 by using an interference fitting steel sleeve on an inner circle and a rolling bearing group in the steel sleeve. The two rotors on the left and right are connected and fastened to the motor shaft 111 by using the locking nut 114 and a connecting key, and transmit torque.

The rolling bearing group between the stator and the motor shaft 111 is angular contact bearings used in pairs. As shown in FIG. 6, the motor shaft of the disc motor is assembled in the stator by using two angular contact bearings, and the two angular contact bearings are symmetrically arranged along the axial direction of the disc powertrain. The angular contact bearing may be specifically a high-speed angular contact bearing. The high-speed angular contact bearing has both a radial bearing capacity and an axial bearing capacity, thereby helping improve reliability of assembling of the motor shaft and the stator. An outer ring of the bearing group implements axial positioning by using a step in an inner hole of the steel sleeve, and an inner ring of the bearing group implements axial positioning by using a step of the motor shaft 111 and a boss of the aluminum backplane. The bearing group is fastened by using the locking nut 114 on the right and is adjusted to a specified working clearance, to ensure that the bearings meet a service life requirement of the disc powertrain, the air gap between the stator and the rotor of the disc motor remains stable, and motor performance is stable and reliable.

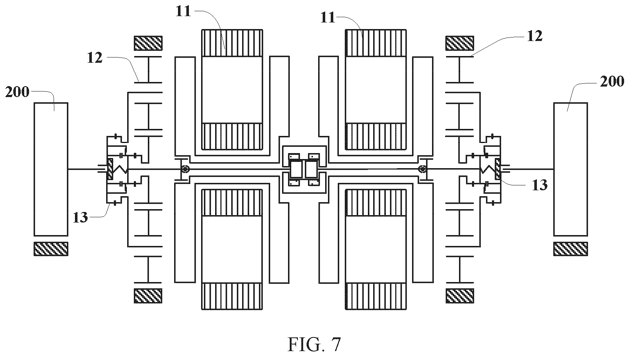

FIG. 7 is a diagram of a structure of a disc powertrain with independent dual-drive dual-speed transmission according to an embodiment of this application. As shown in FIG. 7, this application further provides a disc powertrain with dual-drive dual-speed transmission. The disc powertrain is configured to drive two wheels of an electric vehicle. As shown in FIG. 7, in an embodiment, the disc powertrain with dual-drive dual-speed transmission includes two disc motors 11, two planetary gear reducers 12, and two gearshift mechanisms 13. The two disc motors 11, the two planetary gear reducers 12, and the two gearshift mechanisms 13 are disposed in a mirroring manner along an axial direction. Specifically, the two disc motors 11 are disposed in the middle, and the planetary gear reducers 12 are disposed on both sides of the two disc motors 11. In this embodiment, the disc powertrain with dual-drive dual-speed transmission is configured to be connected to two wheels and drive the two wheels. The disc powertrain in this solution may separately drive two wheels 200 to implement independent dual drives, and the disc powertrain has strong power performance and a compact structure.

In a specific embodiment, the disc powertrain with dual-drive dual-speed transmission includes a gearshift mechanism, two disc motors, and two planetary gear reducers 12. The two disc motors are coaxially arranged between the two planetary gear reducers 12 along an axial direction of the disc powertrain. A motor shaft of each disc motor is configured to be in transmission connection with a sun gear of one of the planetary gear reducers 12 or in transmission connection with a half shaft of one of the wheels, and a planet carrier of each planetary gear reducer 12 is configured to be in transmission connection with a half shaft of one of the wheels. The gearshift mechanism is configured to: separate a transmission connection between a planet carrier of one of the planetary gear reducers 12 and a half shaft of one of the wheels, separate a transmission connection between a sun gear of the one planetary gear reducer 12 and a motor shaft of one of the disc motors, and restore a transmission connection between the motor shaft of the one disc motor and the half shaft of the one wheel. In this state, the motor shaft of the disc motor is directly in transmission connection with the half shaft of the wheel, and power of the disc motor is directly transmitted to the wheel without passing through the reducer, to drive the wheel to move at a rotation speed.

The gearshift mechanism is further configured to: separate the transmission connection between the motor shaft of the one disc motor and the half shaft of the one wheel, restore the transmission connection between the planet carrier of the one planetary gear reducer 12 and the half shaft of the one wheel, and restore a transmission connection between a planetary gear of the one planetary gear reducer 12 and a motor shaft of one of the disc motors. In this state, the motor shaft of the disc motor is in transmission connection with the half shaft of the wheel by using the reducer, and power output by the motor shaft of the disc motor first undergoes a speed change performed by the reducer and then is transmitted to the wheel, to drive the wheel to move at another rotation speed.

In this embodiment of this application, the disc powertrain with dual-drive dual-speed transmission may be understood as including two disc powertrains with single-drive dual-speed transmission, but has high integration. Therefore, for details of each part of the disc powertrain with dual-drive dual-speed transmission, refer to the foregoing embodiments. Details are not described herein.

In a specific embodiment, the motor shafts 111 of the two disc motors 11 are coaxially disposed. On the one hand, the motor shaft 111 of each disc motor 11 is coaxial with a transmission shaft of the wheel 200, and on the other hand, this helps improve integration of the disc powertrain with dual-drive dual-speed transmission.

In an embodiment, the other transmission member of one gearshift mechanism of the disc powertrain is located on a side that is of the one planetary gear reducer 12 and that faces away from the other disc motor, and the other transmission member of the other gearshift structure is located on a side that is of the other planetary gear reducer 12 and that faces away from the one disc motor.

Solenoid valves of two drive assemblies of the disc powertrain are located between the two disc motors, and are configured to improve integration of the disc powertrain.

In an embodiment, solenoid valves 1311 of the two gearshift mechanisms 13 of the disc powertrain may be integrated. For example, the two solenoid valves are assembled in a same housing. Specifically, the disc powertrain may include an armature, and the armature serves as the housing for assembling a coil and a plunger of the solenoid valve. Specifically, coils 13111 of the two solenoid valves 1311 are both disposed in the armature, an accommodating cavity is formed in the armature, and plungers 13112 of the two solenoid valves 1311 are disposed back to back in the accommodating cavity.

In an embodiment, the electric vehicle may alternatively include two disc powertrains with dual-drive dual-speed transmission, to separately drive four wheels 200, thereby implementing independent four drives of the electric vehicle.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A disc powertrain with dual-drive dual-speed transmission, wherein the disc powertrain is configured to drive two wheels of an electric vehicle, and the two wheels comprise two front wheels or two rear wheels of the electric vehicle; the disc powertrain comprises a gearshift mechanism, two disc motors, and two planetary gear reducers; the two disc motors are coaxially arranged between the two planetary gear reducers along an axial direction of the disc powertrain; and a motor shaft of each disc motor is configured to be in transmission connection with a sun gear of one of the planetary gear reducers or in transmission connection with a half shaft of one of the wheels, a planet carrier of each planetary gear reducer is configured to be in transmission connection with a half shaft of one of the wheels, and the gearshift mechanism is configured to:
separate a transmission connection between a planet carrier of one of the planetary gear reducers and a half shaft of one of the wheels, separate a transmission connection between a sun gear of the one planetary gear reducer and a motor shaft of one of the disc motors, and restore a transmission connection between the motor shaft of the one disc motor and the half shaft of the one wheel.

2. The disc powertrain according to claim 1, wherein the gearshift mechanism is further configured to:
separate the transmission connection between the motor shaft of the one disc motor and the half shaft of the one wheel, restore the transmission connection between the planet carrier of the one planetary gear reducer and the half shaft of the one wheel, and restore a transmission connection between a planetary gear of the one planetary gear reducer and a motor shaft of one of the disc motors.

3. The disc powertrain according to claim 1 or 2, wherein one gearshift mechanism comprises a drive assembly and two transmission members, one of the two transmission members is circumferentially fastened to and axially slidably connected to the motor shaft of the disc motor, and the other of the two transmission members is configured to be circumferentially fastened to and axially slidably connected to a half shaft of a wheel; and
the drive assembly is configured to:
drive the one transmission member to move in a first direction, restore a transmission connection between the one transmission member and the sun gear, restore a transmission connection between the planet carrier and the other transmission member, and separate a transmission connection between the one transmission member and the other transmission member; and
drive the other transmission member to move in a second direction, separate the transmission connection between the one transmission member and the sun gear, separate the transmission connection between the planet carrier and the other transmission member, and restore the transmission connection between the one transmission member and the other transmission member, wherein
the first direction and the second direction are parallel to the axial direction, and the first direction and the second direction are opposite.

4. The disc powertrain according to claim 3, wherein one axial end face of the one transmission member and an axial end face of a connector of the sun gear are opposite along the axial direction, and a transmission connection occurs in a state in which the one axial end face of the one transmission member abuts against the axial end face of the connector of the sun gear; another axial end face of the one transmission member and one axial end face of the other transmission member are opposite along the axial direction, and a transmission connection occurs in a state in which the another axial end face of the one transmission member abuts against the one axial end face of the other transmission member; and another axial end face of the other transmission member and an axial end face of the planet carrier are opposite along the axial direction, and a transmission connection occurs in a state in which the another axial end face of the other transmission member abuts against the axial end face of the planet carrier.

5. The disc powertrain according to claim 3, wherein the one transmission member comprises one axial clamping surface, the other transmission member comprises another axial clamping surface, the one axial clamping surface faces the disc motor, the another axial clamping surface faces away from the disc motor, and the one axial clamping surface is adjacent to the another axial clamping surface; and
a projection of the one axial clamping surface along the axial direction at least partially coincides with a projection of the another axial clamping surface along the axial direction.

6. The disc powertrain according to any one of claims 3 to 5, wherein the other transmission member of the one gearshift mechanism is located on a side that is of the one planetary gear reducer and that faces away from the other disc motor, and the other transmission member of the other gearshift mechanism is located on a side that is of the other planetary gear reducer and that faces away from the one disc motor.

7. The disc powertrain according to any one of claims 3 to 6, wherein the drive assembly comprises a solenoid valve and a reset member, the solenoid valve is configured to drive the one transmission member to move in the first direction, and the reset member is configured to drive the one transmission member to move in the second direction; and
a solenoid valve of one drive assembly and a solenoid valve of the other drive assembly are located between the two disc motors.

8. The disc powertrain according to claim 7, wherein the solenoid valve of the one drive assembly and the solenoid valve of the other drive assembly are assembled in a same housing.

9. The disc powertrain according to claim 7 or 8, wherein a shaft hole is provided inside the motor shaft of the disc motor, and the shaft hole runs through the motor shaft along the axial direction; and the solenoid valve is connected to the one transmission member by using an ejector rod, and the ejector rod penetrates the shaft hole.

10. The disc powertrain according to any one of claims 1 to 9, wherein each disc motor comprises one stator and two rotors, the one stator is located between the two rotors along an axial direction of the disc motor, and the two rotors are separately fastened to the motor shaft of the disc motor

11. The disc powertrain according to any one of claims 1 to 10, wherein each disc motor comprises two stators and two rotors, the two stators are coaxially arranged between the two rotors along the axial direction of the disc motor, and the two rotors are separately fastened to the motor shaft of the disc motor

12. The disc powertrain according to claim 10 or 11, wherein the disc motor further comprises a locking nut and a resolver, the locking nut is threadedly connected to the motor shaft of the disc motor, an axial end face of the locking nut abuts against an axial end face of the rotor, and the resolver is mounted on a periphery of the locking nut.

13. The disc powertrain according to any one of claims 10 to 12, wherein the motor shaft of the disc motor is assembled in the stator by using two angular contact bearings, and the two angular contact bearings are symmetrically arranged along the axial direction of the disc powertrain.

14. A disc powertrain with single-drive dual-speed transmission, wherein the disc powertrain is configured to drive a single wheel of an electric vehicle; the disc powertrain comprises a gearshift mechanism, one disc motor, and one planetary gear reducer; along an axial direction of the disc powertrain, the disc motor is located on a side that is of the planetary gear reducer and that faces away from the wheel; and a motor shaft of the disc motor is configured to be in transmission connection with a sun gear of the planetary gear reducer or in transmission connection with a half shaft of the wheel, a planet carrier of the planetary gear reducer is configured to be in transmission connection with the half shaft of the wheel, and the gearshift mechanism is configured to:
separate the transmission connection between the planet carrier of the planetary gear reducer and the half shaft of the wheel, separate the transmission connection between the sun gear of the planetary gear reducer and the motor shaft of the disc motor, and restore the transmission connection between the motor shaft of the disc motor and the half shaft of the wheel; and
separate the transmission connection between the motor shaft of the disc motor and the half shaft of the wheel, restore the transmission connection between the planet carrier of the planetary gear reducer and the half shaft of the wheel, and restore a transmission connection between a planetary gear of the planetary gear reducer and the motor shaft of the disc motor.

15. An electric vehicle, comprising:
two wheels and the disc powertrain according to any one of claims 1 to 13, wherein the disc powertrain is configured to drive the two wheels; or
two wheels and two disc powertrains according to claim 14, wherein each disc powertrain is configured to drive a single wheel of the two wheels.
